(19) Europäisches Patentamt
European Patent Office
Office européen des brevets

(11) Publication number: 0 032 770 B1

(12) EUROPEAN PATENT SPECIFICATION

(45) Date of publication of patent specification: 20.06.84

(51) Int. Cl.$^3$: G 01 N 31/08, B 01 D 15/08

(21) Application number: 81200049.5

(22) Date of filing: 15.01.81

# (54) Apparatus for chromatographic ion analysis and method of chromatographic ion analysis.

(30) Priority: 16.01.80 US 112579

(43) Date of publication of application: 29.07.81 Bulletin 81/30

(45) Publication of the grant of the patent: 20.06.84 Bulletin 84/25

(84) Designated Contracting States: DE FR GB

(56) References cited:
US - A - 3 897 213
US - A - 3 920 397
US - A - 3 925 019
US - A - 3 926 559
US - A - 3 966 596
US - A - 4 070 284

(73) Proprietor: DIONEX CORPORATION
1228 Titan Way
Sunnyvale California 94086 (US)

(72) Inventor: Stevens, Timothy Sean
5102 Foxcroft
Midland Michigan (US)
Inventor: Davis, James Critser
503 Beech Street
East Lansing Michigan (US)
Inventor: Small, Hamish
3810 Moorland Drive
Midland Michigan (US)

(74) Representative: Urbanus, Henricus Maria, Ir. et al,
c/o Vereenigde Octrooibureaux Nieuwe Parklaan 107
NL-2587 BP 's-Gravenhage (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 032 770 B1

Courier Press, Leamington Spa, England.

**Description**

The invention relates to ion analysis and particularly the field of ion analysis known as ion chromatography.

Ion chromatography (IC) is a relatively new technique that permits the measurement of a wide variety of ions in a single elution. It was devised to fill the perceived need for a chromatographic method that would provide rapid precise analysis of common and widely occurring inorganic cations such as $Li^+$, $Na^+$, $K^+$, $NH_4^+$, $Ca^{2+}$, $Mg^{2+}$ and anions such as $Cl^-$, $Br^-$, $I^-$, $NO_3^-$, $NO_2^-$, $SO_4^{2-}$, $PO_4^{3-}$. A unique feature of the method is the use of electrical conductance monitoring as a means of quantifying the eluted sample ions. One of the keys to this successful application of conductance monitoring — a problem in the past — is the use of two ion exchange beds where the first bed serves to separate the ions of the sample while the second suppresses the conductance of the eluent but not that of the sample ions.

There are two major problems to be solved in developing any chromatographic method — the separation problem and the measurement problem. The former involves selecting suitable stationary and mobile phases and elution conditions to effect good resolution of the sample species of interest, either from each other or from any materials in the sample which are not of analytical interest but would interfere in the subsequent analysis. The measurement problem on the other hand is the quantitation of the separated species that are eluted from the column. These two problems, although quite different in a technical sense, must usually be treated together since nowadays a useful chromatographic method generally embodies a high speed, high efficiency separation coupled with a detector capable of prompt and precise measurement of the eluted species. Indeed the history of chromatographic developments suggests that the impact of any chromatographic separation has hinged to a great extent on how successfully it could be integrated with a suitable monitoring device. In this regard, ion exchange chromatography is no exception.

Since the advent of ion exchange technology, chromatography in the ion exchange mode has developed into a strong branch of the chromatographic repertoire. It is intrinsic to ion exchange chromatography, however, that ionic solutions be used as eluents and a successful detector must therefore be capable of measuring the eluted species in this electrolyte background, often with high sensitivity. To this end, the flow through spectro photometer has been a powerful adjunct to the ion exchange column in the IC analysis of organic ions since the ions of interest very often contain chromophores that absorb light at wavelengths where absorption by the eluent electrolytes is relatively much less. For example, ions with aromatic ring systems are particularly amenable to ion exchange — spectro photometric methods. If the sample ions have no chromophores with convenient absorption properties, they can in certain cases be made participants in post column reactions that generate absorbing chromophores which can in turn be measured spectro photometrically. An early and now classic example of this approach is the ion exchange chromatographic analysis of amino acids where the eluted acids are mixed with a reagent such as ninhydrin to form a light absorbing product. While this combination of ion exchange separation and spectrophotometric detection has been a considerable boon to organic and biochemical analysis, inorganic analysis has been less well served since the ions of most interest either lack suitable chromophores or a convenient general means of generating them. It wsa an awareness of this impediment to inorganic chromatographic analysis that prompted the search for a suitable detection method. The culmination of that search was the successful coupling of ion exchange separation with conductometric detection in the technique now known as Ion Chromatography.

Of the many detection methods that might be employed for the measurement of ions, conductometric monitoring holds a particular appeal. It does so for the following reasons:

1. Electrical conductivity in a universal property of ionic solutions.
2. Electrical conductivity is in general a simple function of species concentration — particularly in the ranges of analytical interest.
3. The detector itself, since it is relatively uncomplicated both in principle and in construction, is relatively inexpensive and capable of prolonged trouble free operation.
4. A conductivity cell is very amenable to miniaturization, hence, any limitations in overall IC efficiency attributable to detector volume can be very easily overcome.

From time to time conductance measurement has been proposed or tried as a detection means, but, despite its obvious positive attributes, it has met with meager success. The most likely reason for the prolonged lack of acceptance is a technical one, namely, the inability of the detector to distinguish the conductivity of the sample ions from that of the highly conducting matrix of the eluent. Ion Chromatography copes with this problem of the eluent background by a technique called eluent suppression.

The principle of eluent suppression may be conveyed by a simple illustrative example, namely, the separation and analysis of a mixture of anions (e.g., $Cl^-$ and $Br^-$) on a strong base anion exchanger. Separation of the ions may be effected by using sodium hydroxide as eluent, in which case the sample

ions emerge at different times but in a background of sodium hydroxide. It is the presence of the sodium hydroxide with its high conductivity that severely limits the sensitivity of conductometric detection at this point.

If, however, the effluent from a first column — the "separator column" — is passed to a second column containing a strong acid cation exchanger in the hydrogen form, two important reactions take place in this column:

1. The sodium hydroxide is neutralized by the strong acid cation exchanger to give sodium form resin and deionized water as products thus:

$$R^-H^+ + NaOH \rightarrow R^-Na^+ + H_2O$$

This is the suppression or stripping reaction and this second column is referred to as the "stripper column".

2. The sodium salts that enter the stripper column are converted to the corresponding acids

$$R^-H^+ + NaCl \rightarrow R^-Na^+ + HCl$$

As a result of the reactions in the stripper column, the sample species emerge from this second column in a background of deionized water rather than in the highly conducting eluent in which they entered it. Consequently, conductometric detection is very sensitive when applied to the effluent at this point.

An analogous scheme can be envisaged for cation analysis where an acid such as hydrochloric is used as eluent in conjunction with a cation exchanger in the separator column and a strong base anion exchanger in the hydroxide form as stripper. As in the previous case, water is the product of the stripper reaction.

For eluent suppression to be workable, certain conditions must be met, as is evident from a closer examination of stripper function. In the first place, an appropriate eluent — stripper reaction must be devised). As will be seen later, the product(s) of this reaction need not necessarily be restricted to water, but it (they) should be relatively low conductance. At the same time, the stripper should not react with the sample ions in a manner which would either remove them from the eluent or significantly reduce their conductance.

Ion chromatographic techniques are described in more detail in U.S. Patent Nos. 3,897,213, 3,920,397, 3,925,019 and 3,926,559. In addition, various ion-exchange resins useful in the separation column of an ion chromatography apparatus are described in detail in U.S. Patent Nos. 3,966,596, 4,101,460 and 4,119,580. A more detailed description of ion chromatography is additionally given by Small et al., "Proceedings of an International Conference on the Theory and Practice of Ion Exchange", University of Cambridge, U.K., July, 1976; and also, Small et al., "Novel Ion Exchange Chromatographic Method Using Conductimetric Detection", Analytical Chemistry, Vol. 47, No. 11, September, 1975, pp. 1801 et seq.

One of the drawbacks of present ion chromatography techniques is that the resin bed type stripper column limits the number of samples which can be consecutively analyzed. As few as five samples, for example, may be run in certain types of analysis before regeneration of the resin in the stripper column is required. In addition, low capacity separating resins of from 0.005—0.1 meq/g, and very dilute eluent of from 0.001 to 0.05 molar electrolyte, are necessarily used in prior ion chromatography analysis, since higher capacity resins and/or higher concentrations of electrolyte in the eluent would exhaust the stripper column too rapidly.

Present ion chromatography techniques also have difficulties with resin bed stripper columns which are thought to be caused by the variable length of non-depleted resin in the column as it is being used up. It has been observed, for example, that this factor can vary elution times of certain ions, but with less or no effect on other ions. Consequently, the resolution of ions achieved in the separator column can be lost or detrimentally affected in the stripper column. The foregoing literature references by Small et al. supra, and a more recent journal article "Complication in the Determination of Nitrite by Ion Chromatography", Analytical Chemistry, Vol. 51, p. 1571 (1979), discuss complications which can result from technical problems with present stripper columns.

It is, accordingly, an objective of this invention to provide an improved method and apparatus for selectively suppressing the electrical conductivity of the electrolyte in the eluent but not the separated ions therein. It is a further objective to provide an improved ion chromatography method and apparatus which allows for continuous analysis of consecutive samples without periodic regeneration or replacement of the resin in the stripper column. It is still a further objective of the invention to eliminate unsteady ion responses, i.e., particularly unsteady calibration and elution time variables which are a function of stripper column resin exhaustion.

The invention relates to an apparatus for chromatographic ion analysis comprising an eluent reservoir, a chromatographic separating means in communication with said reservoir for receiving eluent containing an electrolyte in solution therefrom, said separating means including a separating

medium useful for separating ionic species of a sample eluted therethrough, a stripper device communicating with said separating means for treating effluent eluted therefrom, and a detector means for detecting resolved ionic species communicating with the stripper device for receiving the treated effluent therefrom, characterized in that said stripper device comprises a strong acid or strong base ion-exchange membrane for partitioning a regenerant from the effluent of the separating means, said membrane being preferentially permeable to ions of the same charge as exchangeable ions of said membrane, the exchangeable ions of said membrane provided by the regenerant being of the form to convert the electrolyte of the eluent to a weakly ionized form.

The invention further relates to a method of chromatographic ion analysis as described in claim 11. This method comprises the steps of eluting a sample of predetermined volume and containing ionic species to be determined through a separating medium effective to separate the ionic species with the aid of an eluent comprising an electrolyte in solution, thereafter contacting the effluent eluting from the separating medium with a strong acid or strong base ion-exchange membrane comprised in a stripper device and which is permeable to ions of the same charge as the exchangeable ions of said membrane and which resists permeation therethrough of ions of the opposite charge, and simultaneously contacting the membrane with a regenerant, said membrane forming a permselective partition between the regenerant and said effluent, whereby ions exchanged from the effluent at the active ion-exchange sites of the membrane are diffused through the membrane and are exchanged with ions of said regenerant, and are thus diffused ultimately into said regenerant, said exchangeable ions of the ion-exchange membrane being in that form needed to convert said electrolyte of the eluent to a weakly ionized form, and including the step of detecting a resolved ionic species contained in said treated effluent.

The essential feature of the invention is a stripper comprising a charged membrane which is a strong-base anion-exchange membrane (positively charged) with quaternary ammonium functional groups, and which is most typically in the hydroxide ion form. The invention alternately specifies the use of a charged membrane which is a strong-acid cation exchange membrane (negatively charged) with sulfonic acid functional groups, and which is most typically in the hydrogen (hydronium) ion form. More specifically, such ion-exchange membranes which may be beneficially employed in the practice of the invention are those which are permeable to cations or anions, but not both simultaneously. Thus, a cation selective membrane will permeate cations while resisting permeation of anions, or vice versa. The permeating ions are captured at the active exchange sites of the membrane and thus diffuse through the membrane. The diffusing ions are eventually exchanged near the opposite surface of the membrane with ions from a regenerant and, thus, ultimately diffuse into the regenerant and are thus removed from the separator column effluent. Additionally, the membrane continually replaces the thusly extracted cations or anions with like charged ions which suppress the conductivity of the electrolyte in the eluent. While the membrane is continually being exhausted, it is simultaneously continuously regenerated by the ion-exchange reactions occurring adjacent the interface of the regenerant and the membrane.

Ion-exchange membranes having the permselective ion transfer properties utilized to improve ion chromatography herein are known for other uses in the prior art. For example, ion-exchange membranes of the general type useful herein are described by R. M. Wallace, "Concentration and Separation of Ions by Donnan Membrane Equilibrium", I & EC Process Design and Development, *6* (1967); and are also described for uses such as water softening (U.S. Patent No. 3,186,941), and the extraction of acids from polymers and metal ions (U.S. Patent Nos. 3,244,620 and 3,272,737).

Although conveniently prepared and employed as a flat sheet, the most preferred practice of the invention utilizes the membrane in the form of a tube, a single hollow fiber or a bundle of hollow fibers. The membrane, depending on its form, is thus fabricated of a film forming, tube forming, or hollow fiber forming a synthetic resinous material which is treated by known sulfonation and/or amination methods to produce the necessary permselective properties. In finished form, the membranes must be formed of a material which resists dissolution in the various solutions in which it is immersed and/or contacted. The membrane is preferably formed of polyolefins and most preferably of ethylene polymers, such as polyethylene homopolymer which in ion-exchange form is found to possess excellent solvent resistance and ion transfer properties. The most preferred form of the membrane is the hollow fiber(s) form, and the term "hollow fibers" as used herein means fibers having an inside diameter of less than about 2000 μm (2 mm). Preferably, the outside diameter of the hollow fiber is not more than about 1.3 times the internal diameter.

The regenerant may be an acid or base dispersed in a liquid, preferably water; and is preferably in flowing contact with the membrane in order to sweep the diffusing ions physically away from the membrane and thus reduce possible leakage back through the membrane. A regenerant may also be employed comprising immobile acid(s) or base(s), e.g., in which the acid or base is attached to a polymeric backbone. For example, acid or base form ion-exchange resins and particularly resins which are partially or completely dissolved in water, or an aqueous slurry may be used as the regenerant. The latter form of regenerant would be preferred for static regeneration of the membrane, for example, a membrane that is not designed to be continuously regenerated.

The invention has significant advantages over the prior art, for example, it is possible to utilize an

eluent of much higher concentration. In addition, the problems of variable elution times and lack of constant calibration, as heretofore related to the degree of exhaustion as in the prior art resin bed stripper column, are substantially eliminated. In this respect, a static or nonchanging ion-exchange front is established in the membrane as opposed to a continually moving or dynamic front of a resin bed type stripper column. In addition, the "carbonate dip" referred to in the prior art occurs at a constant retention time. The ability to operate continuously while eliminating the need for periodic replacement or regeneration of the stripper column, of course, has been long recognized as desirable and is achieved fully by the practice of the present invention.

Additionally, while the membrane stripper device of the invention is considered principally as a replacement for prior art resin bed stripper columns, it is also possible to use a membrane stripper device of the invention and a resin bed stripper column of the prior art connected in series in order to achieve extended lifetime of the resin bed stripper column.

Further objects and advantages of the invention will be apparent from the following more detailed description and the accompanying drawings, in which

Fig. 1 is an elevational view of an apparatus for performing ion chromatography which is constructed to employ a membrane stripper device of the invention;

Fig. 2 is a cross-sectional view detail view of the membrane stripper device;

Fig. 3 is an enlarged cross-sectional view of a single hollow fiber membrane as used in the stripper device, and wherein is graphically illustrated the permselective ion transfer properties of the membrane; and

Figs. 4—10 are chromatograms together with certain graphs resulting from the use of the apparatus and method of the invention and/or resulting from the use of prior art strippers, and are particularly associated with the Example Series 1—10, below.

Referring to Fig. 1, there is shown a schematic view of an ion chromatography instrument or apparatus used in practicing the invention and which comprises a chromatographic separator column 10 which is packed with an ion exchange separating medium such as an ion-exchange resin. The invention may employ any form of ion-exchange resins useful in separating cations or anions.

Arranged in series with the column 10 is a stripper device 11 for suppressing the conductivity of the electrolyte in the eluent, but not the conductivity of the separated ions. This device is particularly described with respect to the following detailed description of Figs. 2 and 3.

The stripper device 11 is followed by a detector suitable for detecting resolved ionic species which preferably is a flow-through conductivity cell 12. A sample of an ionic species may be placed into column 10 in any suitable manner but preferably is injected by means of a syringe 20 into a constant volume loop injection valve 13. The sample injected by valve 13 is swept through the apparatus by the eluent 14 drawn from a reservoir 15 by a pump 16. The pressure of the eluent is monitored by a pressure gauge 17 and is passed through the injection valve 13 to column 10. Alternatively, the eluent may be added into column 10 manually as by pouring it from a container into an open end in the column. However, the eluent is preferably pumped for greater convenience and in order to obtain greater uniformity of flow and reproducibility of results. The eluent leaving column 10 with the ionic species resolved therein is conveyed by a conduit to the stripper device 11 wherein the electrolyte of the eluent is converted to a weakly ionized form. The eluent with the resolved ionic species therein is treated by stripper device 11 and is then passed to conductivity cell 12.

In the conductivity cell 12 the presence of ionic species produces an electrical signal which is proportional to the amount of such ionic species in the eluent which is directed from conductivity cell 12 to a conductivity meter 18, thus permitting detection and measurement of the concentration of the ionic species of the sample. The electrical signal from the meter 18 is preferably recorded by chart recorder 19 in the form of a chromatogram. Additionally, an integrator (not shown) may be coupled to the chart recorder 19 in order to integrally calculate the area under the peaks generated on the chromatogram. From these calculations, the concentrations of various ionic species may be determined. The calculation of concentration may also be performed based on peak height as opposed to peak area.

The stripper device 11 is constructed in its most preferred form to include a reservoir of regenerant 21, a metering pump 22, and an ion-exchange membrane stripper device 23. The reservoir and pump are connected by a conduit 21a to deliver regenerant to the stripper device. The stripper device receives the regenerant through an inlet 24 and ultimately discharges the spent regenerant to a waste vessel or waste drain 25 via an outlet 26.

With particular reference to Fig. 2, there is illustrated a detailed view of the membrane stripper device 23 which is preferably constructed of a plurality of hollow fibers 27. Initially and prior to the fibers sulfonation the fibers have an inner diameter (ID) of about 300 $\mu$m and an outer diameter (OD) about 380 $\mu$. Sulfonation of the fibers is conducted by a procedure to be described hereinafter in order to convert the fibers to an $H^+$ ion form or any other strong acid ion-exchange form which is selectively permeable to cations but substantially impermeable to anions. The fibers are preferably prepared from a low density polyethylene via extrusion in a known manner thorugh a spinnette.

In a particular example, the stripper device 23 was constructed of a center section of 2 mm ID, 3.2 mm OD, 316 stainless steel tube or jacket 28 through which was assed a bundle of a plurality of

hollow fibers 27. The fibers were threaded through the tube by suction using water as a lubricant and in another example by gluing one end of a length of thread to one end of a fiber bundle and pulling the bundle through the tube using water as the lubricant. A pair of T-assemblies are attached to opposite ends, respectively, of the tube 28. T-fitting 29 and tube nuts 30 with ferrules 31 constitute an attachment to the ends of the tube 28.

Exposed end portions of the hollow fibers 27 (outwardly of each T-fitting) are dried and inserted into sealing tubes 32, respectively, which are preferably made of stainless steel. A section of about 15 cm of the fiber bundle extending beyond each T-fitting 29 is left exposed and the exposed sections are coated with a suitable sealant, preferably Silastic 732 RTV silicone rubber (from Dow Corning Corporation, Midland, Michigan), as indicated at areas 33, after which the sealing tubes 32 are inserted over the coated fiber ends and coupled to the T-fittings 29 by means of conventional tube nuts 34 and ferrules 35. Additional sealant is injected into the sealing tubes 32 using a blunt hollow needle and a 1 cc plastic syringe to completely fill each tube but taking care not to force excess sealant into the T-fittings 29. The sealant is allowed to cure for 10 minutes to promote bonding of the sealant to the fibers. One end of the exposed fiber bundle is then placed into a beaker of water and suction is applied to the other end to draw water through the fibers to thereby swell the fiber material. After three days of curing, a cutting tool such as a razor blade is used to cut the ends of the fiber bundle off so that they are flush with the ends of the sealing tubes. The stripper device 23 is then ready to be coupled into the analytical apparatus of Fig. 1. The sealing tubes 32 are connected, by means of conventional reducing unions 37 to conduits 32a between separating column 10 and conductivity cell 12. The reducing unions 37 are desirably modified by chamfering the small bore of each union as shown at 43, respectively, to avoid flow blockage adjacent the fiber ends. The T-fittings 29 also provide points of attachment for conduit connections to the regenerant inlet 24 and regenerant outlet 26. These latter connections may be of the same type described, supra, using a tube 38 joined at one end to T-fitting 29 by means of tube nuts 40 and ferrules 41. At the opposite end, the tubes 38 are joined respectively to the regenerant inlet and outlet through reducing unions 42. Fiber sections within couplings 36 which communicate, respectively, with separate column 10 and regenerant reservoir 21.

The stripper device 11 operates by receiving the effluent from the separator column 10 which is conducted internally through the hollow fibers 27. Simultaneously, regenerant solution from the reservoir 21 is pumped in a counter-current flow into regenerant inlet 24 and flows exteriorly of the fibers within the tube 28 to regenerant outlet 26 and waste 25. Accordingly, ion-exchanging contact of the regenerant solution is made with the exterior surfaces of the hollow fibers in the tube which, internally, are in simultaneous ion-exchanging contact with the effluent from the separator column 10. The electrolyte component of the eluent is thus neutralized by an ion-exchange reaction with the interior walls of the fibers, and the exterior fiber walls are continuously regenerated by the counter flowing regenerant. Passage of regenerant into the counter-current flow of the eluent is minimized because of Donnan Exclusion forces, as is passage of sample ions from the eluent stream to the regenerant stream.

Fig. 3 provides a graphic illustration of the working principle of the invention using a dilute solution of $H_2SO_4$ in water as the regenerant and NaOH as the electrolyte of the eluent. The ion-exchange membrane partition such as a flat sheet or hollow fiber may be formed of, for example, a sulfonated polyethylene, or fluoropolymer which allows sodium ions to permeate out and hydrogen ions to permeate into the eluent stream. Hydroxide and sulfate ions tend not to permeate the membrane wall because of Donnan Exclusion forces. Thus, the NaOH stream is converted to deionized water while the $Na^+$ ions which permeate the membrane wall are dispersed in the regenerant and are ultimately routed to waste line 26 as $NaHSO_4$ and $Na_2SO_4$.

If the flow rate of the eluent along the membrane surface is too fast, the time for the ions to diffuse to the membrane wall may be too short for complete neutralization to occur at the desired eluent pumping rate.

If the membrane wall is too impermeable, incomplete neutralization may also occur. This problem may be overcome by using membranes with a higher level of sulfonation, and thus, greater permeability. Generally, the flow rate (in meq/min) of the eluent into the stripper device must be matched by a regenerant flow rate (in meq/min) flowing preferably in a countercurrent flow on the opposite surface of the membrane. Some excess of regenerant is usually required due to less than 100% efficiency of regenerant utilization. For example, in a stripper device tested, an excess of about 10—50% (in meq/min) of regenerant with respect to the electrolyte in the eluent as found to work satisfactorily. In addition, Donnan Exclusion forces may not totally block passage or "leakage" of regenerant into the eluent stream. Also, weak acid or weak base ions might be expected to permeate the membrane, thus losing a portion of these sample ions.

Example Series 1

Several different hollow fiber membrane devices were constructed for experimental testing and comparison using low density polyethylene fibers. The fibers were prepared for sulfonation by coiling a bundle of fibers and securing the bundle by Teflon tape. The fibers were subsequently filled with methylene chloride by the use of a vacuum applied to one end of the fiber bundle, with the other end

dipped into methylene chloride. 250 ml of a solution of 25 ml of chlorosulfonic acid and 225 ml of methylene chloride was then placed in a 3 neck/one liter round bottom flask equipped with a condenser and a heating mantle. The coiled fibers were placed into the flask and soaked for about 1/2 hour. The heating mantle was then turned on and the solution heated to boiling temperature. During each 5-minute interval, a glass stirring rod was inserted into the flask to immerse the coil. After a predetermined period of time, varying from 15 minutes to two hours, the fibers were retrieved and placed into a beaker containing 250 ml of methylene chloride to soak for about 1/2 hour. The fibers were then transferred to another beaker and soaked in deionized water for 24 hours, after which the deionized water was replaced with fresh deionized water and the soaking step repeated. The finished fibers were then installed into the stripper devices as further characterized in Table I.

TABLE I

| Device # | Sulfonation time of the fibers (min) | Capacity of the fibers meq/g | OD of the fibers μm | ID of the fibers μm | Length of each fiber in the device (cm) | # of Fibers in device | Residence time in device (min) | Total inside surface membrane area in device $cm^2$ |
|---|---|---|---|---|---|---|---|---|
| 1 | 15 | 0.5[a] | 420 | 330 | 97 | 12 | 0.93[b] | 120 |
| 2 | 30 | 1[a] | 420 | 330 | 97 | 12 | 0.93[b] | 120 |
| 3 | 60 | 1.95 | 460 | 360 | 81 | 7 | 0.54[b] | 64 |
| 4 | 120 | 4[a] | 540 | 425 | 54 | 5 | 0.36[b] | 36 |

[a]estimated capacity based on the determined capacity of the fibers used in Device #3, in terms of meq of cation exchange capacity/g of dry sulfonated fiber, assuming a linear relationship between capacity and sulfonation time.

[b]at a flow rate of 64 ml/hr.

Example Series 2

The effect of regenerant acid passage or "leakage" for different concentrations of nitric acid, phosphoric acid and sulfuric acid regenerant solution was determined using device #3. The eluent was deionized water at a flow rate of 64 ml/hr and the regenerant flow rate was 92 ml/hr. Leakage was determined as an increase in conductivity greater than that of deionized water. The results in $\mu$ mho/cm are shown in Table II.

TABLE II

Increase in conductivity in $\mu$ mho/cm of eluent deionized water at a flow rate of 64 ml/hr

| | Concentration | | |
|---|---|---|---|
| Regenerant | 0.01 *N* | 0.02 *N* | 0.05 *N* |
| $H_2PO_4$ | 22 | — | 160 |
| $HNO_3$ | 12 | — | 200 |
| $H_2SO_4$ | 1.5 | 3 | 12 |

The lower leakage of sulfuric acid shown in Table II is due to its high acid strength and the polyvalent nature of the sulfate anion. Polyvalent anions carry a higher charge density that results in a higher repulsion between the fiber wall and the anion. Phosphoric acid is not strong enough to prevent the formation of $H_2PO_4^-$ ions.

Example Series 3

The effect of leakage as a function of fiber capacity was also determined using an eluent of deionized water at a flow rate of 64 ml/hr and a regenerant flow rate of 92 ml/hr of 0.01 *N* $H_2SO_4$ and 0.05 *N* $H_2SO_4$. The conductivity in $\mu$ mho/cm of the effluent eluent was measured from each device and the results are reported in Table III:

TABLE III

| Device # | 0.01 *N* $H_2SO_4$ | 0.05 *N* $H_2SO_4$ |
|---|---|---|
| 1 | ND | 4 |
| 2 | ND | 10 |
| 3 | 1.5 | 24 |
| 4 | 3 | 70 |

ND=not detected, detection limit 0.5 $\mu$ mho/cm.

The data in Table III indicate that the devices made with the lower ion exchange capacity fibers have acceptable leakage characteristics since the normal eluents used for anion analysis in ion chromatography have a sodium concentration of about 0.01 *N* allowing regenerant acid concentrations of about 0.02 *N* at similar flow rates as the eluent flow rate. However, low capacity fibers also have a greater resistance to the diffusion of ions through the fiber wall.

Example Series 4

The dominant factors involved in the resistance to mass transfer of ions in a hollow fiber stripper are diffusion through the eluent flow stream to the fiber wall, and then through the fiber wall itself. Two experiments were made in an attempt to show each effect. The first experiment involved the neutralization of a relatively strong eluent, 0.1 *M* NaOH, to determine the number of meq/hr of NaOH that can be completely neutralized by a 50% excess countercurrent flow of dilute $H_2SO_4$ for each $cm^2$ of available inside surface of the fiber, i.e., diffusional resistance through the fiber wall. These results are shown in Table IV. The second experiment involved the neutralization of a normal strength eluent, 0.01 *M* NaOH, to determine the maximum rate allowable with complete neutralization by a 50% excess countercurrent flow of dilute $H_2SO_4$. Conditions were chosen where diffusional resistance through the eluent flow stream to the fiber wall were predominant, and this data is shown in Table V.

TABLE IV

| Device # | Maximum flow rate of 0.1 *M* NaOH with complete neutralization | Meq of NaOH neutralized per $cm^2$ of surface area per hour | Residence time in device at the maximum eluent flow rate |
|---|---|---|---|
| 1 | 32 ml/hr | 0.027 | 1.86 min |
| 2 | 96 ml/hr | 0.080 | 0.62 min |
| 3 | 80 ml/hr | 0.13 | 0.43 min |
| " | 16 ml/hr (1 *M* NaOH) | 0.25 | 2.16 min |
| 4 | 48 ml/hr | 0.13 | 0.48 min |

TABLE V

| Device # | Maximum flow rate of 0.1 *M* NaOH with complete neutralization | Meq of NaOH neutralized per $cm^2$ of surface area per hour | Residence time in device at the maximum eluent flow rate |
|---|---|---|---|
| 1 | 64 ml/hr | 0.0053 | 0.93 min |
| 2 | 96 ml/hr | 0.0080 | 0.62 min |
| 3 | 96 ml/hr | 0.015 | 0.36 min |
| 4 | 64 ml/hr | 0.018 | 0.36 min |

The data in Tables IV and V indicate that the diffusional resistance to the membrane surface through the eluent flow stream is predominant under the conditions studied for Devices 2, 3, and 4. The reduction of the NaOH concentration of the eluent by a factor of 10 provided no increase or only a small increase in eluent flow rate. Only for Device #1, a significant difference was noted between the experiments with regard to maximum eluent flow rate.

Comparing the data regarding leakage in Table III with the diffusional resistance data in Tables IV and V, optimum performance was obtained using fibers of about 1 meq/g capacity (fibers sulfonated as described for 30 minutes as used in Device #2). The use of these fibers minimize regenerant leakage without significant diffusional resistance through the fiber walls with the use of normal eluent strengths (about 0.01 *N*).

Example Series 5

Based on the comparative results of the preceding Example Series, a membrane device was constructed containing 8 fibers sulfonated as described for 30 minutes. Each fiber in the device being six feet in length and the device being coiled for compactness.

Two prior art stripper columns were compared to this hollow fiber stripper. The first was a 2.8 mm×300 mm column containing about 1.8 ml of Dowex® 50W-X16 hydrogen ion form, 200—400 U.S. Standard Mesh ion exchange resin. This is a "small" stripper column having a lifetime under typical conditions of about six hours. Small stripper columns are preferred when the ion exclusion effects of stripper column exhaustion need to be minimized. The second prior art stripper column tested was a 9 mm×110 mm column containing about 7 ml of the same ion exchange resin. This "big stripper" has a lifetime of about 24 hours and is used where long column life is more important than reducing the ion exclusion effects in the unexhausted fraction of the stripper column.

The most common eluent used for the determination of anions in ion chromatography contains 0.003 *M* $NaHCO_3$ and 0.0024 *M* $Na_2CO_3$ in deionized water (which was used for the following examples at a flow rate of 64 ml/hr). The stripper column converts these eluent electrolytes to carbonic acid which has little conductivity because of its weak acid character. When an injection of deionized water containing no anions is made, two negative peaks are seen in the chromatogram. The first, called the "water dip" is related to the plug of injected water moving through the system with eluent of slightly higher conductivity on either side of it. The second, called the "carbonate dip", is larger and is the vacancy chromatogram for the carbonate not in the injected sample but present in the eluent. That is, carbonic acid elutes through the unexhausted portion of the stripper column at a reduced rate because of ion exclusion effects. When an injection of deionized water is made, the vacancy of carbonate ions elutes through the system at the same rate as an injection of carbonate ions would and a vacancy dip is thus seen. Fig. 4 compares the water dip and the carbonate dip for two freshly regenerated stripped columns and for the hollow fiber stripper.

Also, from Fig. 4, it should be noted that the baseline for the 9×110 mm stripper is unsteady

because the stripper column has not "aged". Large stripper columns require many hours of rinsing after regeneration (depending on the batch of ion exchange resin used) to wash out leachable ions. This column ultimately gave a steady baseline the following day. It should be noted that the water dip of the larger stripper column comes later than the water dip of the smaller stripper column due to the increased void volume of the larger stripper column. In addition, it should be noted that the separation between the water dip and the carbonate dip is much greater for the larger stripper column because of increased ion exclusion effects seen with the larger stripper column. Finally, both dips are combined with the hollow fiber stripper device of the invention because of the apparent absence of ion exclusion effects.

Example Series 6

Fig. 5 relates to prior art comparative chromatograms and shows the variance of the elution time of the carbonate dip as a function of stripper column ion exchange resin exhaustion. This effect which can produce undesirable variance in the response factor of ions co-eluting with the variable carbonate dip, is shown with respect to an injection of a mixture of seven anions. The position of the carbonate dip is shown specifically in the left chromatogram of Fig. 5 with respect to a freshly regenerated 9x110 mm prior art stripper column, and in the right chromatogram when the same stripper is about half exhausted. Thus, in the chromatogram on the left, the carbonate dip elutes at about six minutes, co-eluting with $NO_2^-$. In the right chromatogram, the carbonate dip elutes at about four and one-half minutes, co-eluting with $Cl^-$, resulting in a larger response for $NO_2^-$ and a smaller response for $Cl^-$.

In respect to the use of the invention, Fig. 6 shows a chromatogram of the same seven ion standard, using the hollow fiber stripper device. The carbonate dip co-elutes with $F^-$ but its effect can be coped with because it is constant since the hollow fiber stripper device does not exhaust with use.

Example Series 7

The band spreading of each stripper was determined by removing the separator column from the system, changing the eluent to deionized water, and injecting a 1:1 dilution of the seven ion standard in deionized water at a detector sensitivity of 120 $\mu$ mho/cm full chart deflection. The resulting on-scale peak was then triangulated and the peak width at baseline measured and converted to $\mu$l. The injection volume was then subtracted from this value and the results were used as an indication of the band spreading of the stripper as shown in Table VI:

TABLE VI

| Stripper | Band spreading |
|---|---|
| 2.8x300 mm Packed Column | 130 $\mu$l |
| 9x110 mm Packed Column | 300 $\mu$l |
| Hollow Fiber Stripper | 525 $\mu$l |

The data in Table VI indicate that the use of the hollow fiber stripper device results in more band spreading than a resin bed stripper column. However, this is not always the case since increased band spreading is obtained with the use of resin bed type stripper columns with respect to weak acid anions such as acetate anion.

Example Series 8

The determination of weak acid anions, such as acetate, using a stripper column, is complicated by ion exclusion effects in the unexhausted portion of the stripper column. Fig. 7 shows chromatograms for the injection of NaAc standard using the 2.8x300 mm stripper column, the 9x110 mm stripper column, and the hollow fiber stripper device. Expectedly, both resin bed type stripper columns, and especially the 9x110 mm stripper column, broaden and retard the acetate peak due to ion exclusion effects. The use of the hollow fiber stripper device theoretically should have resulted in the loss of the acetate response (and there may indeed be some loss) since protonated acetate is not rejected from passage through the fiber wall. However, Fig. 7 clearly demonstrates the surprising utility of acetate determination using a hollow fiber stripper device.

Example Series 9

Comparisons made between the resin bed type stripper columns and the hollow fiber stripper device to determine response linearity for chloride, bromide and acetate are shown in Figures 8—10, respectively.

The data in Fig. 8 indicate that the use of both the 2.8x300 mm resin bed type stripper column and the hollow fiber stripper device result in an increased response with an increasing concentration of chloride. The linearity with the 9x110 mm resin bed type stripper column is good. The reduced response with the hollow fiber stripper device is caused by the broader chloride peak as a result of the relatively greater band spreading in the hollow fiber stripper device. Although the linearity of the 9x110 mm stripper is initially good, the data in Fig. 5 indicates that as the 9x110 mm stripper exhausts and

the carbonate dip begins to co-elute with chloride, the responsiveness of chloride changes detrimentally and significantly.

The data in Fig. 9 indicate that the use of any of the strippers tested would result in linear responses with respect to bromide. The data in Fig. 10 indicate that the responsiveness of acetate falls off at higher concentration with the use of the 2.8x300 mm stripper, and thus significantly better linearity is shown by the hollow fiber stripper device in this type of weak anion analysis.

Example Series 10

In another comparison, the seven ion standard and the acetate standard were periodically injected during the lifetime of a 2.8x300 mm resin bed type stripper column. The same tests were conducted with the hollow fiber stripper device of the invention. The data is shown in Table VII with respect to the prior art and in Table VIII with respect to the hollow fiber stripper device.

TABLE VII

| Ambient temp. °C | Elapsed time since regeneration in hours | Peak height in chart units for: $F^-$ | $Cl^-$ | $NO_2^-$ | $PO_4^{-3}$ | $Br^-$ | $NO_3^-$ | $SO_4^{-2}$ | $Ac^-$ |
|---|---|---|---|---|---|---|---|---|---|
| 22.0 | 0.3 | 77.0 | 28.7 | 10.5 | 34.0 | 9.5 | 26.0 | 53.0 | — |
| 22.0 | 0.7 | — | — | — | — | — | — | — | 29.8 |
| 22.0 | 0.8 | 75.0 | 29.0 | 10.0 | 33.5 | 9.2 | 25.0 | 37.8 | — |
| 22.0 | 1.5 | 76.2 | 31.0 | 12.0 | 34.5 | 9.5 | 26.5 | 45.0 | — |
| 22.0 | 2.5 | — | — | — | — | — | — | — | 34.0 |
| 22.0 | 3.2 | 77.0 | 32.5 | 17.0 | 35.5 | 10.2 | 27.5 | 47.2 | — |
| 22.0 | 4.1 | 78.8 | 32.0 | 18.8 | 35.5 | 10.2 | 27.2 | 43.0 | — |
| 22.0 | 5.1 | 79.0 | 31.0 | 22.2 | 35.7 | 10.0 | 27.2 | 40.5 | — |
| 22.0 | 5.5 | — | — | — | — | — | — | — | 51.0 |
| 22.5 | 6.2 | 79.0 | 32.0 | 27.2 | 36.5 | 11.2 | 29.6 | 43.0 | — |
| 22.5 | 6.8 | 79.0 | 32.0 | 30.5 | 36.8 | 11.2 | 29.8 | 43.0 | — |
| 22.0 | 7.3 | — | — | — | — | — | — | — | 76.0 |
| 22.5 | 7.7 | 81.5 | 32.0 | 33.8 | 36.5 | 11.6 | 30.5 | 42.0 | — |
| 22.5 | 8.1 | 83.5 | 31.8 | 35.5 | 36.2 | 11.2 | 30.0 | 42.0 | — |
| | | | | Regenerated stripper | | | | | |
| 22.5 | 0.2 | 72.0 | 31.8 | 10.8 | 37.5 | 11.4 | 30.5 | 44.0 | — |
| 22.5 | 0.5 | 73.0 | 31.8 | 11.5 | 37.0 | 11.0 | 30.0 | 43.0 | — |
| 22.5 | 0.8 | — | — | — | — | — | — | — | 31.0 |

TABLE VIII

| Ambient temp. °C | Elapsed time in hours | Peak height in chart units for: $F^-$ | $Cl^-$ | $NO_2^-$ | $PO_4^{-3}$ | $Br^-$ | $NO_3^-$ | $SO_4^{-2}$ | $Ac^-$ |
|---|---|---|---|---|---|---|---|---|---|
| 20.5 | 0.3 | 29.0 | 24.3 | 12.0 | 33.8 | 11.2 | 28.8 | 45.2 | — |
| 21.0 | 1.0 | 28.8 | 22.0 | 11.6 | 34.2 | 11.0 | 29.0 | 45.0 | — |
| 21.0 | 1.5 | — | — | — | — | — | — | — | 42.8 |
| 21.0 | 2.0 | 28.8 | 22.2 | 10.5 | 35.6 | 11.5 | 30.5 | 45.5 | — |
| 21.5 | 2.5 | 29.2 | 22.6 | 10.8 | 36.0 | 11.0 | 30.0 | 47.0 | — |
| 21.5 | 3.0 | 29.8 | 22.8 | 10.6 | 36.0 | 11.6 | 31.2 | 46.0 | — |
| 21.5 | 4.2 | — | — | — | — | — | — | — | 43.8 |
| 22.0 | 4.5 | 29.6 | 23.0 | 10.2 | 35.5 | 11.1 | 30.0 | 46.5 | — |
| 22.0 | 5.5 | 30.5 | 23.5 | 9.5 | 36.5 | 11.8 | 32.0 | 47.2 | — |
| 22.0 | 6.0 | — | — | — | — | — | — | — | 44.2 |
| 22.0 | 6.6 | 30.6 | 23.8 | 10.0 | 36.5 | 11.0 | 30.0 | 46.0 | — |
| 22.0 | 7.1 | — | — | — | — | — | — | — | 43.5 |

The data in Table VII indicate a general instrumental upward drift in the response of $Cl^-$, $PO_4^{-3}$, $Br^-$, and $NO_3^-$ not related to exhaustion of the stripper column as evidenced by the response continuity of these ions when the stripper column is regenerated. Acetate and $F^-$ response, measured by peak height, increases with stripper column exhaustion. However, the acetate and $F^-$ responses remain constant when response is measured by peak area using a planimeter. In contrast, both the peak height and peak area response of $NO_2^-$ varies by a factor of about 3 with exhaustion of the stripper column. Nitrite forms nitrous acid in the unexhausted portion of the stripper column and nitrous acid apparently partially reacts with the resin affecting response depending on stripper column exhaustion.

The data in Table VIII indicate that the use of the hollow fiber stripper device resulted in a stable

response from all of the ions tested. Thus, a very significant advantage of the hollow fiber stripper device, with regard to calibration is that responsiveness is not a function of stripper exhaustion but remains substantially constant with use.

**Claims**

1. Apparatus for chromatographic ion analysis comprising an eluent reservoir (14), a chromatographic separating means (10) in communication with said reservoir (14) for receiving eluent containing an electrolyte in solution therefrom, said separating means (10) including a separating medium useful for separating ionic species of a sample eluted therethrough, a stripper device (11) communicating with said separating means (10) for treating effluent eluted therefrom, and a detector means (12) for detecting resolved ionic species, communicating with the stripper device (11) for receiving the treated effluent therefrom, characterized in that said stripper device (11) comprises a strong acid or strong base ion-exchange membrane for partitioning a regenerant from the effluent of the separating means (10), said membrane being preferentially permeable to ions of the same charge as exchangeable ions of said membrane, the exchangeable ions of said membrane provided by the regenerant being of the form to convert the electrolyte of the eluent to a weakly ionized form.

2. The apparatus of claim 1, wherein said membrane is in the form of one or more hollow fibers (27).

3. The apparatus of claim 1, wherein said membrane comprises at least one hollow fiber (27) immersed within a moving stream of said regenerant, the bore of said hollow fiber (27) being in communication with said separating means (10) for receiving the effluent therefrom.

4. The apparatus of claim 1, 2 or 3 including a reservoir (21) for said regenerant, and means for conveying said regenerant from the reservoir (21) to the stripper device (11).

5. The apparatus of claim 4, wherein said conveying means provides for countercurrent flow of effluent with respect to the regenerant through the hollow fiber (27).

6. The apparatus of claim 1, wherein the strong acid ion exchange membrane is of a synthetic resinous material and in the hydrogen ion form.

7. The apparatus of claim 1, wherein said membrane is selected from a sulfonated or aminated synthetic resinous material.

8. The apparatus of claim 1, wherein the strong base ion-exchange membrane is of a synthetic resinous material and in the hydroxide ion form.

9. The apparatus of any one of the preceding claims, wherein said detector means (12) comprises a flow through electrical conductivity cell.

10. The apparatus of claim 6, 7 or 8, wherein said membrane is selected from a polyethylene homopolymer or a fluorinated polymer.

11. Method of chromatographic ion analysis comprising the steps of eluting a sample of predetermined volume and containing ionic species to be determined through a separating medium effective to separate the ionic species with the aid of an eluent comprising an electrolyte in solution, thereafter treating the effluent eluting from the separating medium in a stripper device and including the step of detecting a resolved ionic species contained in said treated effluent, characterized in contacting the effluent eluting from the separating medium with a strong acid or strong base ion-exchange membrane comprised in said stripper device and which is permeable to ions of the same charge as the exchangeable ions of said membrane and which resists permeation therethrough of ions of the opposite charge, and simultaneously contacting the membrane with a regenerant, said membrane forming a permselective partition between the regenerant and said effluent, whereby ions exchanged from the effluent at the active ion-exchange sites of the membrane are diffused through the membrane and are exchanged with ions of said regenerant, and are thus diffused ultimately into said regenerant, said exchangeable ions of the ion-exchange membrane being in that form needed to convert said electrolyte of the eluent to a weakly ionized form.

12. The method of claim 11, wherein said membrane is continuously contacted by a flowing stream of fresh regenerant.

13. The method of claim 11, wherein said membrane is in the form of one or more hollow fibers.

14. The method of claim 13 including the step of routing the effluent from the separating means through the internal bores of said one or more hollow fibers in a direction countercurrent to the flow of regenerant, said resolved ionic species being detected by measuring the electrical conductivity thereof.

15. The method of any one of claims 11 to 14, wherein said membrane is selected from a strong acid ion-exchanger in the hydrogen ion form, a sulfonated polyolefin, a sulfonated fluoropolymer, a strong base ion-exchanger in the hydroxide ion form, an aminated polyolefin, or an aminated fluoropolymer.

**Patentansprüche**

1. Vorrichtung zur chromatographischen Ionenanalyse enthaltend einen Eluens-Vorratsbehälter (14), eine mit dem Vorratsbehälter (14) zur Aufnahme des Eluens, das einen Elektrolyten in Lösung

enthält, in Verbindung stehende chromatographische Trennvorrichtung (10), die ein Trennmedium zur Trennung von Ionenarten einer Probe, die durch das Medium eluiert wird, enthält, eine Abtrenn-(Stripper)-vorrichtung (11), die mit der Trennvorrichtung (10) in Verbindung steht, zur Behandlung des daraus eluierten Effluens, und eine Detektorvorrichtung (12) zur Bestimmung der aufgetrennten Ionenarten, die mit der Abtrenn-(Stripper)-vorrichtung (11) verbunden ist, um von dort das behandelte Effluens zu erhalten, dadurch gekennzeichnet, daß die Abtrenn-(Stripper)-vorrichtung (11) eine stark saure oder stark basische Ionenaustauschermembran zur Abtrennung eines Regenerierungsmittels vom Effluens der Trennvorrichtung (10) enthält, wobei diese Membran vorzugsweise für Ionen der gleichen Ladung wie die austauschbaren Ionen dieser Membran durchlässig ist, und die durch das Regenerierungsmittel bereitgestellten austauschbaren Ionen dieser Membran in der Form vorliegen, die den Elektrolyten des Eluens in eine schwach ionisierte Form überführen.

2. Vorrichtung nach Anspruch 1, dadurch gekennzeichnet, daß die Membran in Form von einer oder mehreren Hohlfasern (27) vorliegt.

3. Vorrichtung nach Anspruch 1, dadurch gekennzeichnet, daß die Membran mindestens eine Hohlfaser (27) enthält, die in einem sich bewegenden Strom des Regenierungsmittels eingetaucht ist, und wobei die Bohrung dieser Hohlfaser (27) in Verbindung mit der Trennvorrichtung (10) steht, um von dort das Effluens zu erhalten.

4. Vorrichtung nach Anspruch 1, 2 oder 3, dadurch gekennzeichnet, daß sie einen Vorratsbehälter (21) für das Regenierungsmittel enthält, und Mittel zum Transport des Regenierungsmittels von dem Vorratsbehälter (21) zu der Abtrenn-(Stripper)-vorrichtung (11).

5. Vorrichtung nach Anspruch 4, dadurch gekennzeichnet, daß das Transportmittel einen Effluensfluß durch die Hohlfaser (27) im Gegenstrom zu dem Regenerierungsmittel bewirkt.

6. Vorrichtung nach Anspruch 1, dadurch gekennzeichnet, daß die stark sauer Ionenaustauschermembran aus einem synthetischen harzartigen Material besteht und in der Wasserstoffionenform vorliegt.

7. Vorrichtung nach Anspruch 1, dadurch gekennzeichnet, daß die Membran ausgewählt ist aus einem sulfonierten oder aminierten synthetischen harzartigen Material.

8. Vorrichtung nach Anspruch 1, dadurch gekennzeichnet, daß die stark basische Ionenaustauschermembran aus einem synthetischen harzartigen Material besteht und in der Hydroxydionenform vorliegt.

9. Vorrichtung nach einem der vorhergehenden Ansprüche, dadurch gekennzeichnet, daß die Detektorvorrichtung (12) einen Durchfluß durch eine elektrische Leitfähigkeitszelle umfaßt.

10. Vorrichtung nach Anspruch 6, 7 oder 8, dadurch gekennzeichnet, daß die Membran ausgewählt ist aus einem Polyäthylen-Homopolymeren oder einem fluorierten Polymeren.

11. Verfahren zur chromatographischen Ionenanalyse enthaltend die Stufen: Elution einer Probe eines vorbestimmten Volumens, die zu bestimmende Ionenarten enthält, durch ein Trennmedium, das die Trennung der Ionenarten mit Hilfe eines Eluens, das einen Elektrolyten in Lösung enthält, bewirkt, nachfolgende Behandlung des aus dem Trennmedium eluierten Effluens in einer Abtrenn-(Stripper)-vorrichtung, und mit der Stufe zur Bestimmung einer aufgetrennten Ionenart, die in dem behandelten Effluens enthalten ist, dadurch gekennzeichnet, daß man das aus dem Trennmedium austretende Effluens mit einer stark sauren oder stark basischen Ionenaustauschermembran in Kontakt bringt, die in der Abtrenn-(Stripper)-vorrichtung enthalten ist, und für Ionen der gleichen Ladung wie die austauschbaren Ionen dieser Membran durchlässig ist, und die den Durchtritt von Ionen der entgegengesetzten Ladung durch sie verhindert, und gleichzeitig die Membran mit einem Regenerierungsmittel in Kontakt bringt, wobei die Membran eine permeabilitätsselektive Abtrennung zwischen dem Regenierungsmittel und dem Effluens bildet, und worin die aus dem Effluens an den aktiven Ionenaustauscherstellen der Membran ausgetauschten Ionen durch die Membran hindurchdiffundieren und mit den Ionen des Regenerierungsmittels ausgetauscht werden, und auf diese Weise schließlich un das Regenerierungsmittel diffundieren, und die austauschbaren Ionen der Ionenaustauschermembran in der Form sind, die benötigt wird, um den Elektrolyten des Eluens in eine schwach ionisierte Form zu überführen.

12. Verfahren nach Anspruch 11, dadurch gekennzeichnet, daß die Membran mit einem fließenden Strom von frischem Regenerierungsmittel in kontinuierlichem Kontakt steht.

13. Verfahren nach Anspruch 11, dadurch gekennzeichnet, daß die Membran in der Form einer oder mehrerer Hohlfasern vorliegt.

14. Verfahren nach Anspruch 13, dadurch gekennzeichnet, daß es die Stufe enthält, in der das Effluens von der Trennvorrichtung durch die inneren Bohrungen der einen oder mehreren Hohlfasern in einer Richtung geführt wird, die im Gegenstrom zu dem Fluß des Regenerierungsmittels steht, und die aufgetrennten Ionenarten durch Messung ihrer elektrischen Leitfähigkeit bestimmt werden.

15. Verfahren nach einem der Ansprüche 11 bis 14, dadurch gekennzeichnet, daß die Membran ausgewählt ist aus einem stark sauren Ionenaustauscher in der Wasserstoffionenform, einem sulfonierten Polyolefin, einem sulfonierten Fluorpolymeren, einem stark basischen Ionenaustauscher in der Hydroxydionenform, einem aminierten Polyolefin oder einem aminierten Fluorpolymeren.

**Revendications**

1. Appareil pour l'analyse d'ions par chromatographie, comprenant un réservoir d'éluant (14), un moyen de séparation chromatographique (10) en communication avec ledit réservoir (14) pour en recevoir l'éluant contenant un électrolyte en solution, ledit moyen de séparation (10) comprenant un milieu de séparation utile pour séparer des espèces ioniques d'un échantillon élué à travers lui, un dispositif de "stripping" (11) communiquant avec ledit moyen de séparation (10) pour traiter l'effluent qui en est élué, et un moyen détecteur (12) pour détecter les espèces ioniques résolues, communiquant avec ledit dispositif de "stripping" (11) pour en recevoir l'effluent traité, caractérisé par le fait que ledit dispositif de "stripping" (11) comprend une membrane échangeuse d'ions acide fort ou base forte, pour séparer un régénérant de l'effluent du moyen de séparation (10), ladite membrane étant de préférence perméable aux ions ayant la même charge que les ions échangeables de ladite membrane, les ions échangeables de ladite membrane fournis par le régénérant étant sous une forme leur permettant de convertir l'électrolyte de l'éluant en une forme faiblement ionisée.

2. Appareil selon la revendication 1, dans lequel ladite membrane se présente sous la forme d'une ou plusieurs fibres creuses (27).

3. Appareil selon la revendication 1, dans lequel ladite membrane comprend au moins une fibre creuse (27) immergée dans un courant en écoulement dudit régénérant, l'alésage de ladite fibre creuse (27) étant en communication avec ledit moyen de séparation (10) pour en recevoir l'effluent.

4. Appareil selon la revendication 1, 2 ou 3, comprenant un réservoir (21) pour ledit régénérant, et un moyen pour transporter ledit régénérant du réservoir (21) au dispositif de "stripping" (11).

5. Appareil selon la revendication 4, dans lequel ledit moyen de transport assure un écoulement à contre-courant de l'effluent par rapport au régénérant à travers la fibre creuse (27).

6. Appareil selon la revendication 1, dans lequel la membrane échangeuse d'ions acide fort est en un matériau résineux synthétique et sous la forme ion hydrogène.

7. Appareil selon la revendication 1, dans lequel ladite membrane est choisie parmi les matériaux résineux synthétiques sulfonés ou aminés.

8. Appareil selon la revendication 1, dans lequel la membrane échangeuse d'ions base forte est en un matériau résineux synthétique et se présente sous la forme ion hydroxyde.

9. Appareil selon l'une des revendications précédentes, dans lequel ledit moyen détecteur (12) comprend un écoulement à travers une cellule de conductivité électrique.

10. Appareil selon la revendication 6, 7 ou 8, dans lequel ladite membrane est choisie entre un homopolymère de polyéthylène et un polymère fluoré.

11. Procédé d'analyse chromatographique d'ions, comprenant les étapes consistant à éluer un échantillon de volume prédéterminé et contenant des espèces ioniques à déterminer, à travers un milieu de séparation capable de séparer les espèces ioniques à l'aide d'un éluant comprenant un électrolyte en solution, puis à traiter l'effluent s'éluant du milieu de séparation dans un dispositif de "stripping", et comprenant l'étape consistant à détecter une espèce ionique résolue contenue dans ledit effluent traité, caractérisé par la mise en contact de l'effluent s'éluant du milieu de séparation avec une membrane échangeuse d'ions acide fort ou base forte comprise dans ledit dispositif de "stripping", et qui est perméable aux ions ayant la même charge que les ions échangeables de ladite membrane et qui résiste à la pénétration, à travers elle, d'ions ayant la charge opposée, et par la mise en contact simultanée de la membrane avec un régénérant, ladite membrane formant une cloison de séparation à perméation sélective entre le régénerant et ledit effluent, les ions échangés provenant de l'effluent sur les sites d'échange d'ions actifs de la membrane diffusant à travers la membrane et étant échangés avec des ions dudit régénérant, et étant ainsi finalement diffusés à l'intérieur dudit régénérant, lesdits ions échangeables de la membrane échangeuse d'ions se trouvant sous la forme nécessaire pour convertir ledit électrolyte de l'éluant en une forme faiblement ionisée.

12. Procédé selon la revendication 11, dans lequel ladite membrane est mise en contact en continu avec un courant en écoulement de régénérant frais.

13. Procédé selon la revendication 11, dans lequel ladite membrane se présente sous la forme d'une ou plusieurs fibres creuses.

14. Procédé selon la revendication 13, comprenant l'étape consistant à envoyer l'effluent provenant du moyen de séparation à travers les alésages internes de ladite (ou desdites) fibre(s) creuse(s) dans une direction à contre-courant de l'écoulement du régénérant, lesdites espèces ioniques résolues étant détectées par la mesure de leur conductivité électrique.

15. Procédé selon l'une des revendications 11 à 14, dans lequel ladite membrane est choisie entre un échangeur d'ions acide fort sous forme ion hydrogène, une polyoléfine sulfonée, un fluoropolymère sulfoné, un échangeur d'ions base forte sous forme ion hydroxyde, une polyoléfine aminée ou un fluoropolymère aminé.

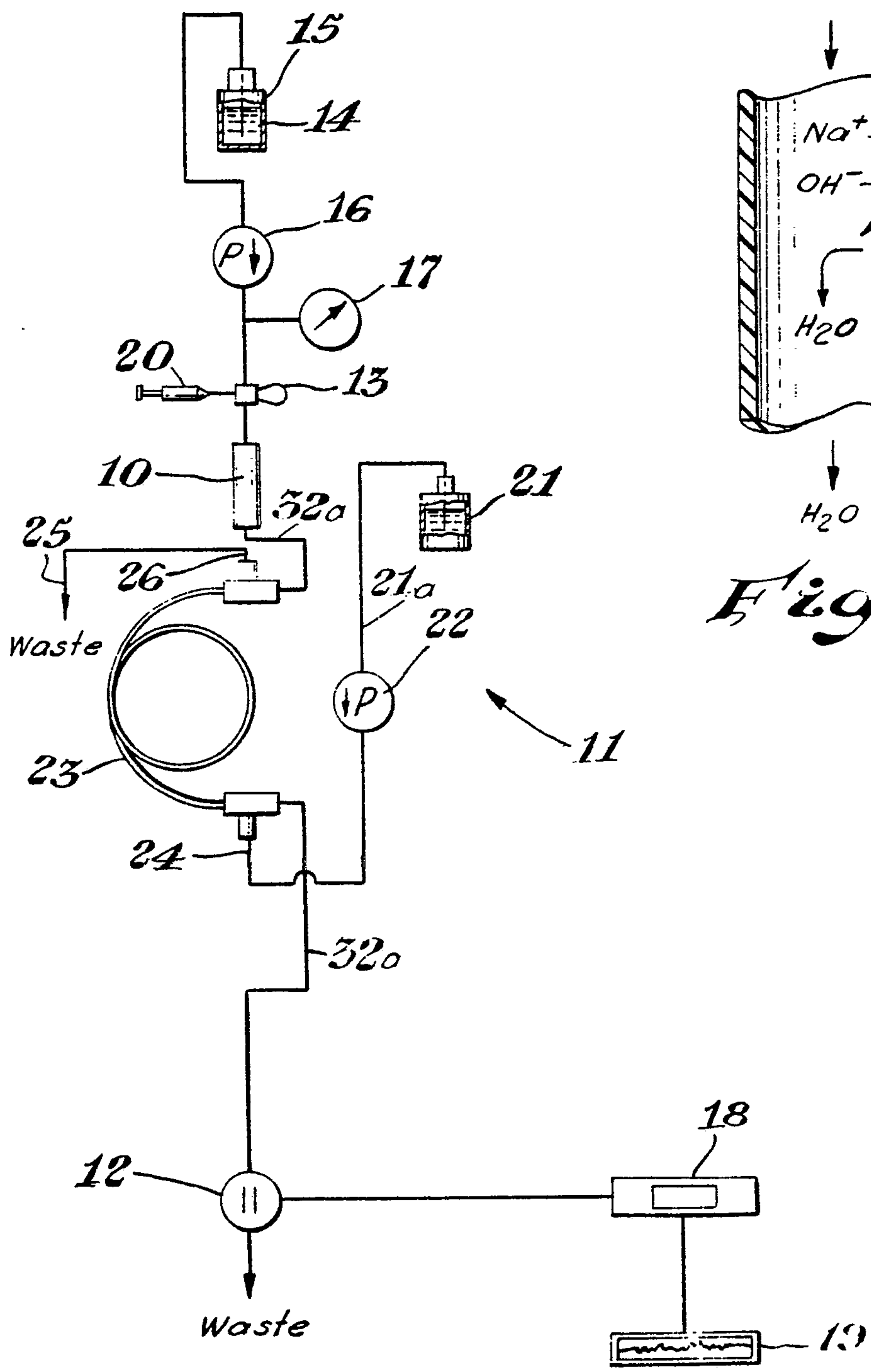
15
14
16
P
17
20
13
10
32a
25
26
Waste
21
21a
22
P
11
23
24
32a
12
18
19
Waste

Fig. 1

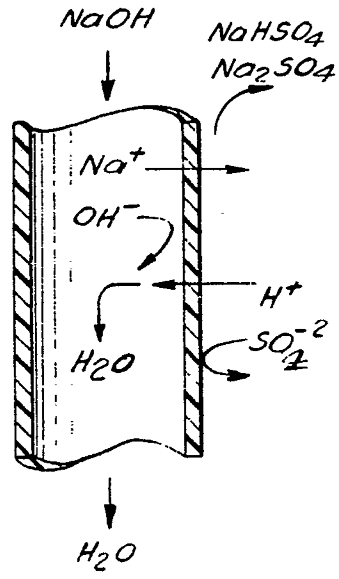
NaOH
$NaHSO_4$
$Na_2SO_4$
$Na^+$
$OH^-$
$H^+$
$H_2O$
$SO_4^{-2}$
$H_2O$

Fig. 3

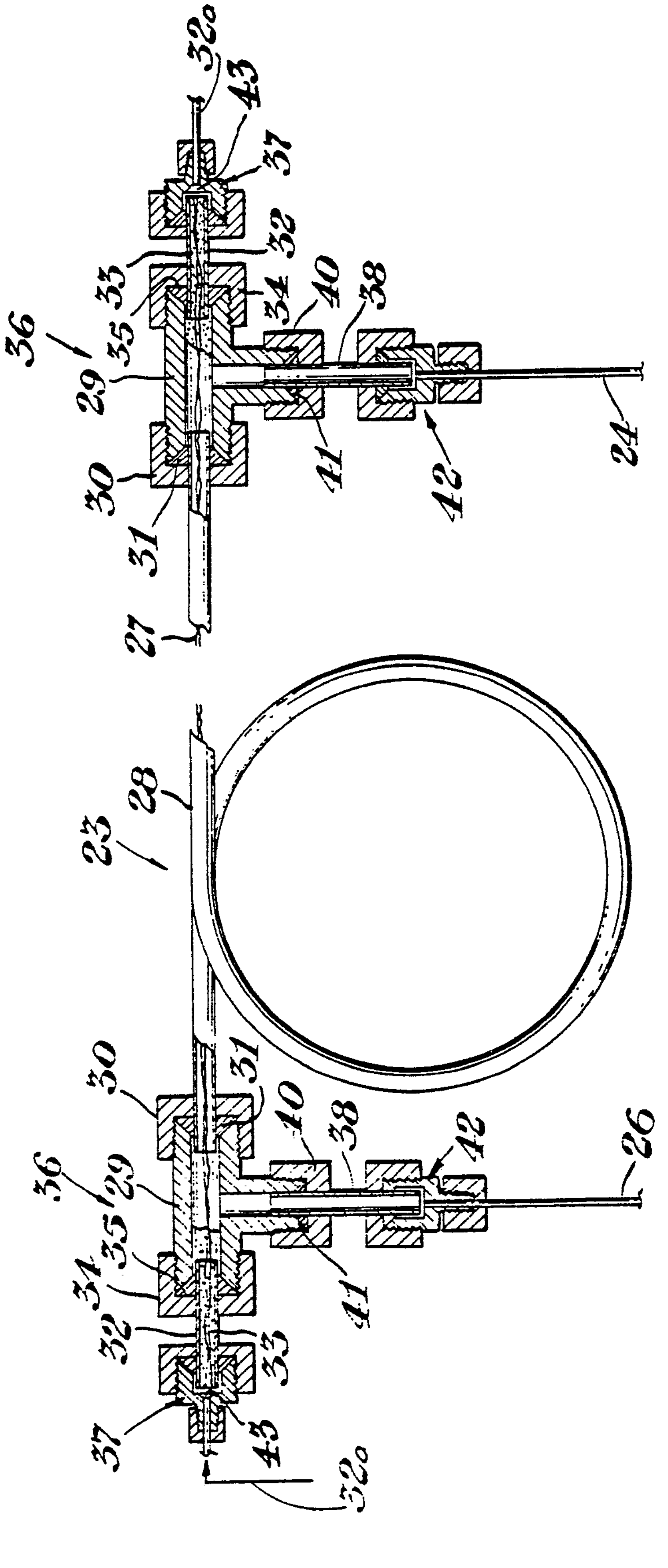


Fig. 2

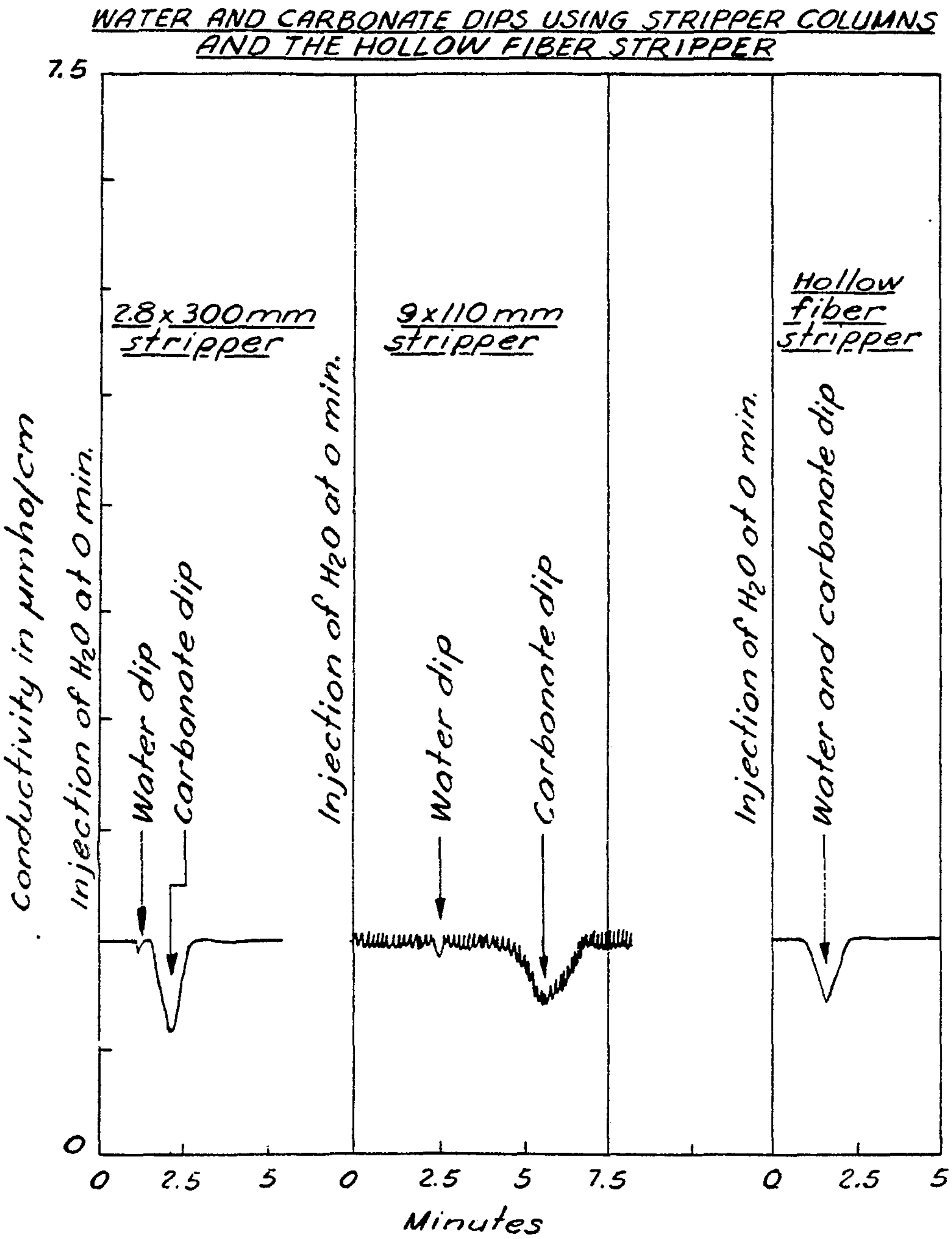
WATER AND CARBONATE DIPS USING STRIPPER COLUMNS
AND THE HOLLOW FIBER STRIPPER
7.5
0
Conductivity in μmho/cm
2.8 x 300mm stripper
9 x 110 mm stripper
Hollow fiber stripper
Injection of $H_2O$ at 0 min.
Water dip
carbonate dip
Injection of $H_2O$ at 0 min.
Water dip
Carbonate dip
Injection of $H_2O$ at 0 min.
Water and carbonate dip
0
2.5
5
0
2.5
5
7.5
0
2.5
5
Minutes

Fig. 4

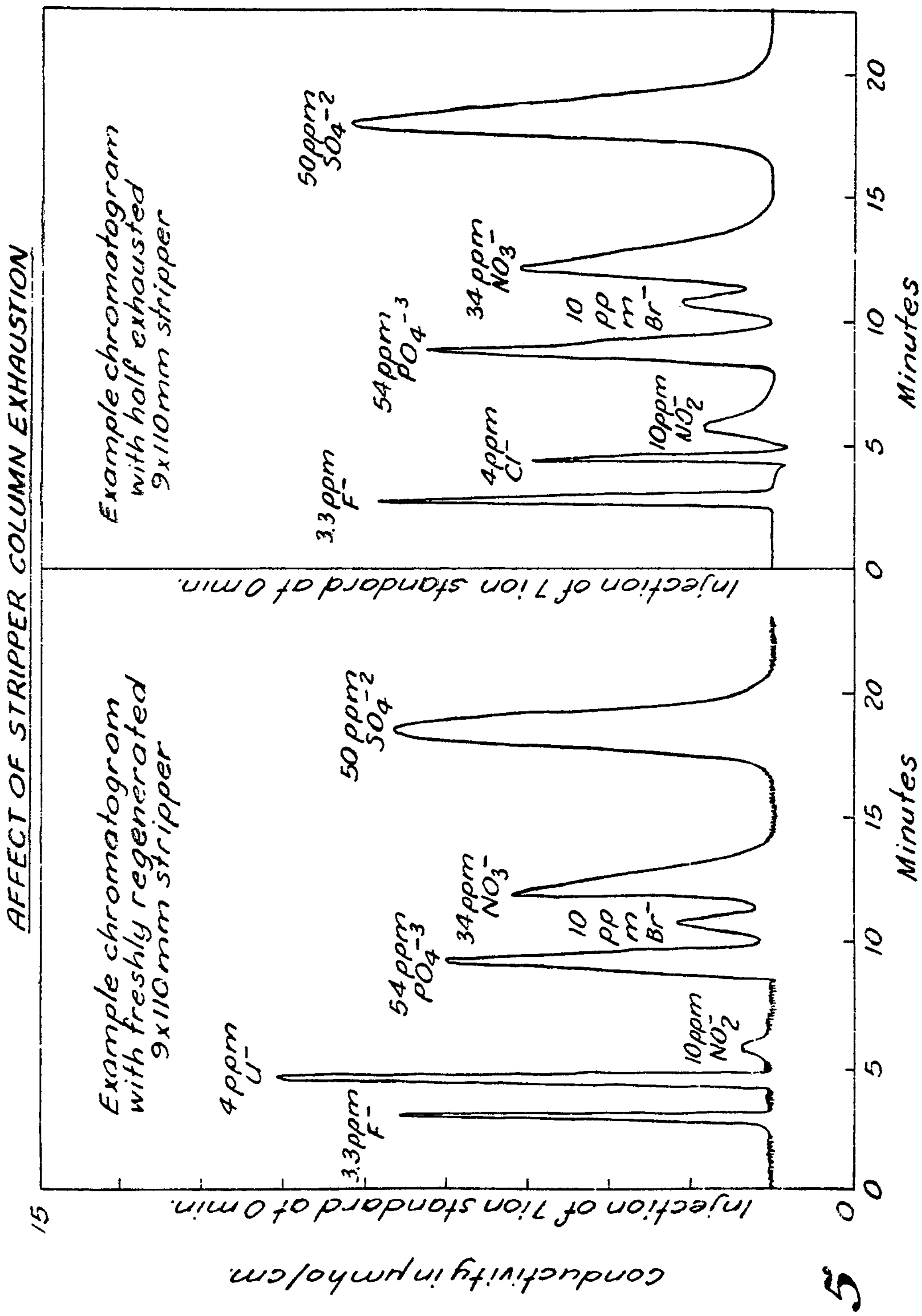
AFFECT OF STRIPPER COLUMN EXHAUSTION
Example chromatogram with freshly regenerated 9x110mm stripper
Example chromatogram with half exhausted 9x110mm stripper
3.3ppm F⁻
4ppm Cl⁻
10ppm NO2⁻
54ppm PO4⁻3
10 pp m Br⁻
34ppm NO3⁻
50ppm SO4⁻2
Injection of 7 ion standard at 0 min.
Minutes
conductivity in μmho/cm.
0
5
10
15
20


Fig. 5

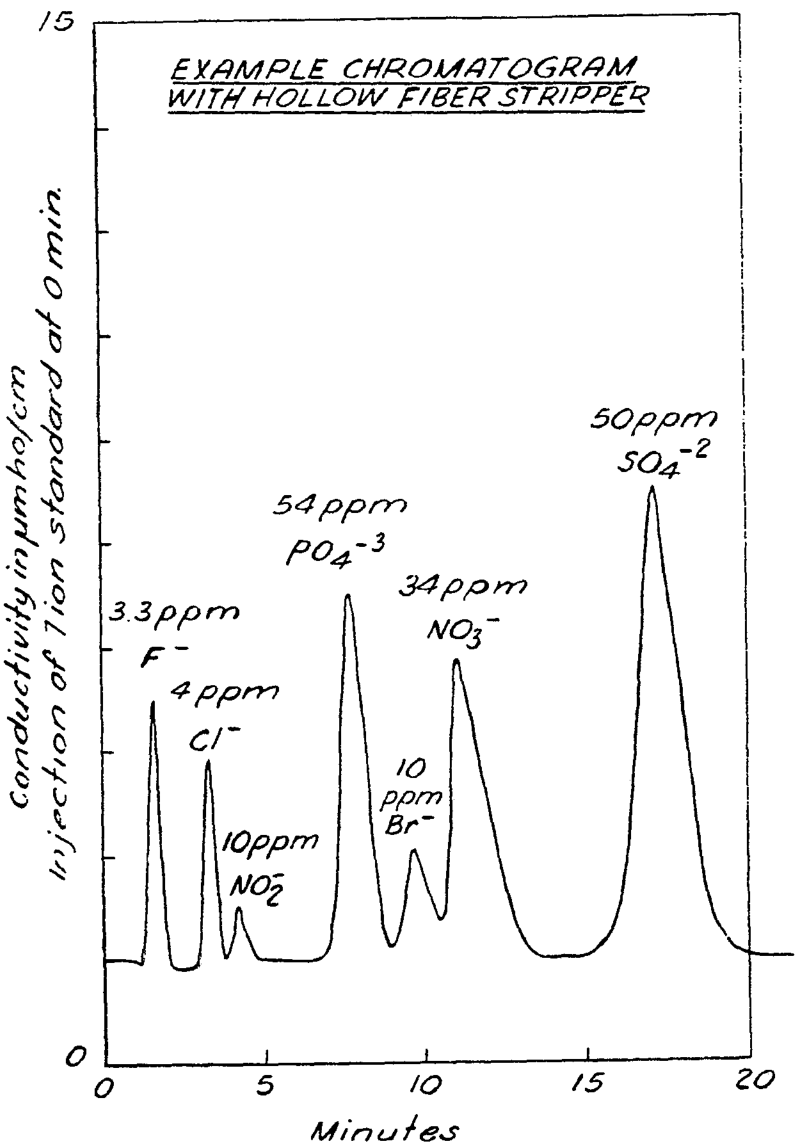
EXAMPLE CHROMATOGRAM
WITH HOLLOW FIBER STRIPPER
Conductivity in μmho/cm
Injection of 7 ion standard at 0 min.
15
0
3.3 ppm
F⁻
4 ppm
Cl⁻
10 ppm
NO2⁻
54 ppm
PO4⁻³
10
ppm
Br⁻
34 ppm
NO3⁻
50 ppm
SO4⁻²
0
5
10
15
20
Minutes

Fig. 6

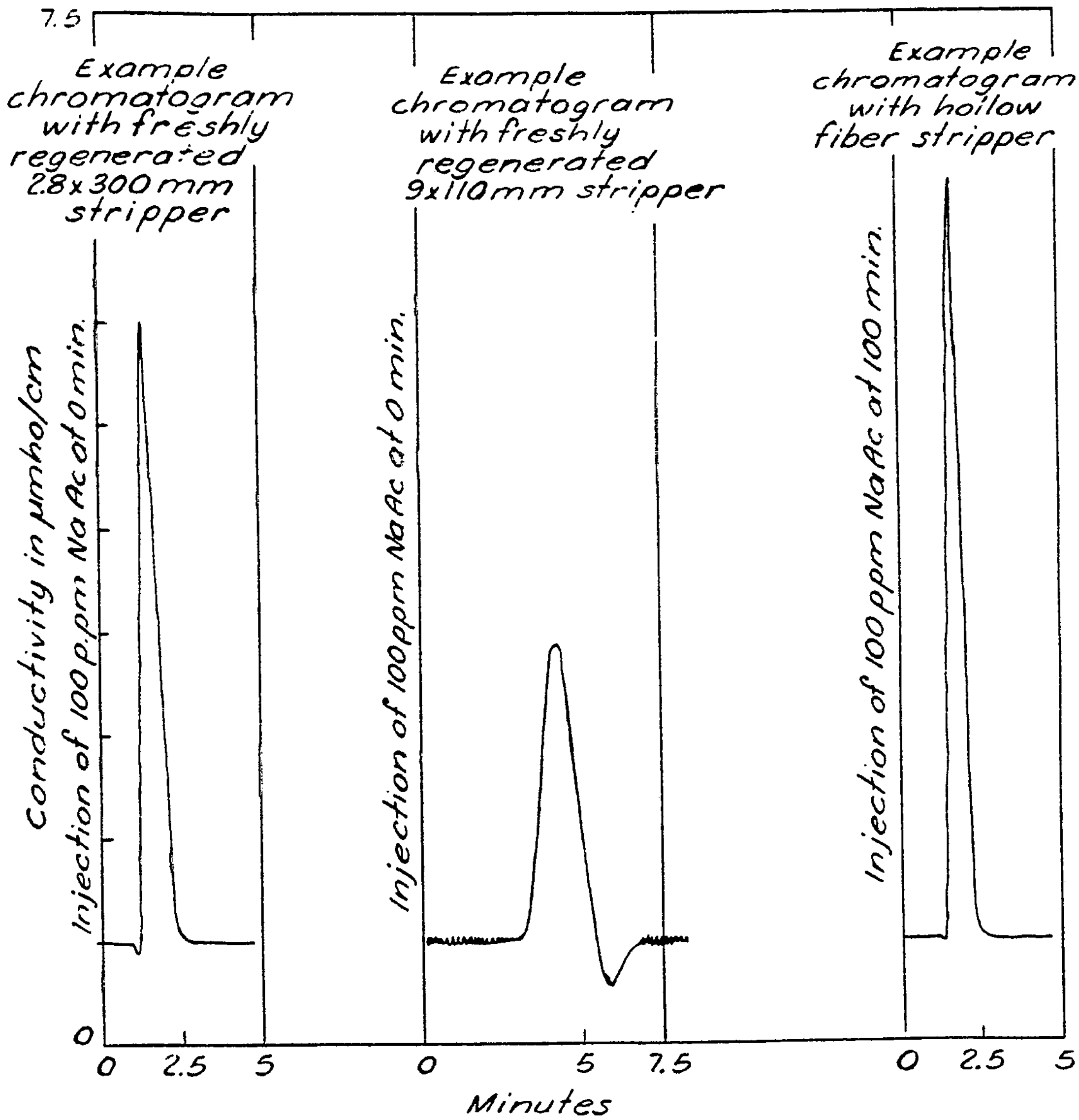
7.5
Example chromatogram with freshly regenerated 2.8x300 mm stripper
Example chromatogram with freshly regenerated 9x110mm stripper
Example chromatogram with hollow fiber stripper
Conductivity in μmho/cm
Injection of 100 p.p.m Na Ac at 0 min.
Injection of 100ppm NaAc at 0 min.
Injection of 100 ppm NaAc at 100 min.
0
0
2.5
5
0
5
7.5
0
2.5
5
Minutes

Fig. 7

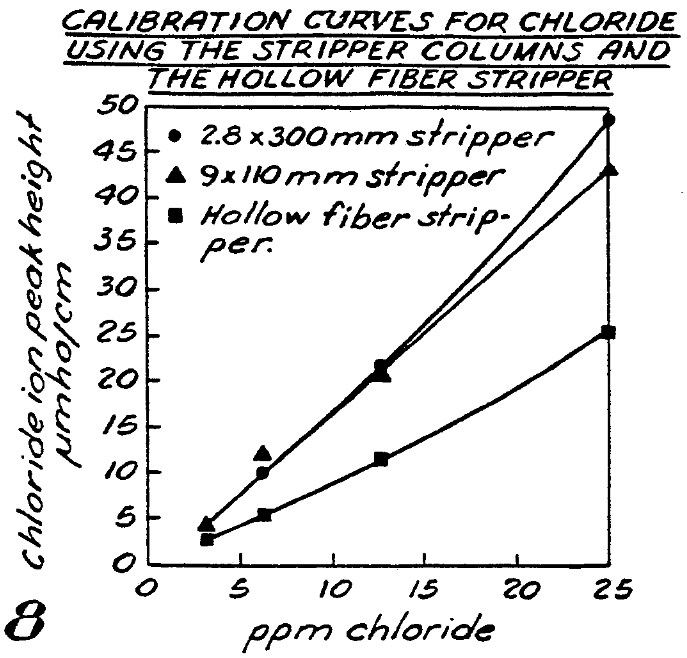
CALIBRATION CURVES FOR CHLORIDE USING THE STRIPPER COLUMNS AND THE HOLLOW FIBER STRIPPER
Chloride ion peak height µmho/cm
ppm chloride
● 2.8x300mm stripper
▲ 9x110mm stripper
■ Hollow fiber stripper.
0
5
10
15
20
25
30
35
40
45
50

Fig. 8

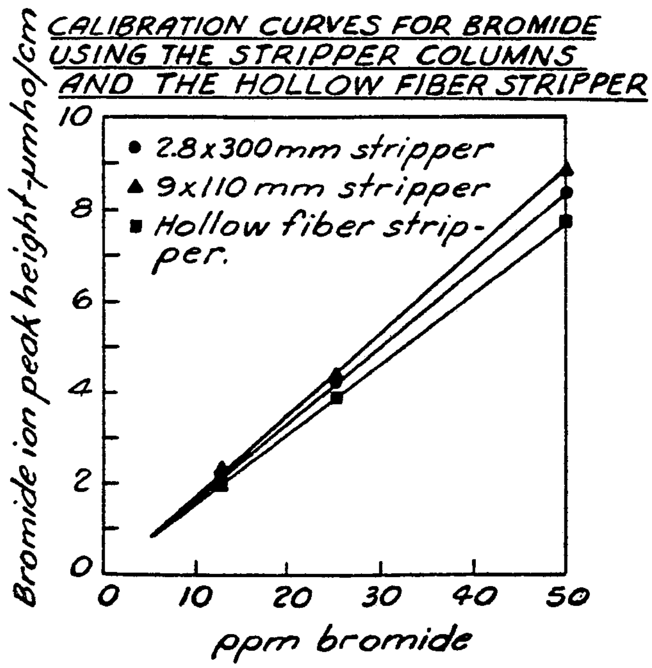
CALIBRATION CURVES FOR BROMIDE USING THE STRIPPER COLUMNS AND THE HOLLOW FIBER STRIPPER
Bromide ion peak height-µmho/cm
ppm bromide
● 2.8x300mm stripper
▲ 9x110 mm stripper
■ Hollow fiber stripper.
0
2
4
6
8
10
20
30
40
50

Fig. 9

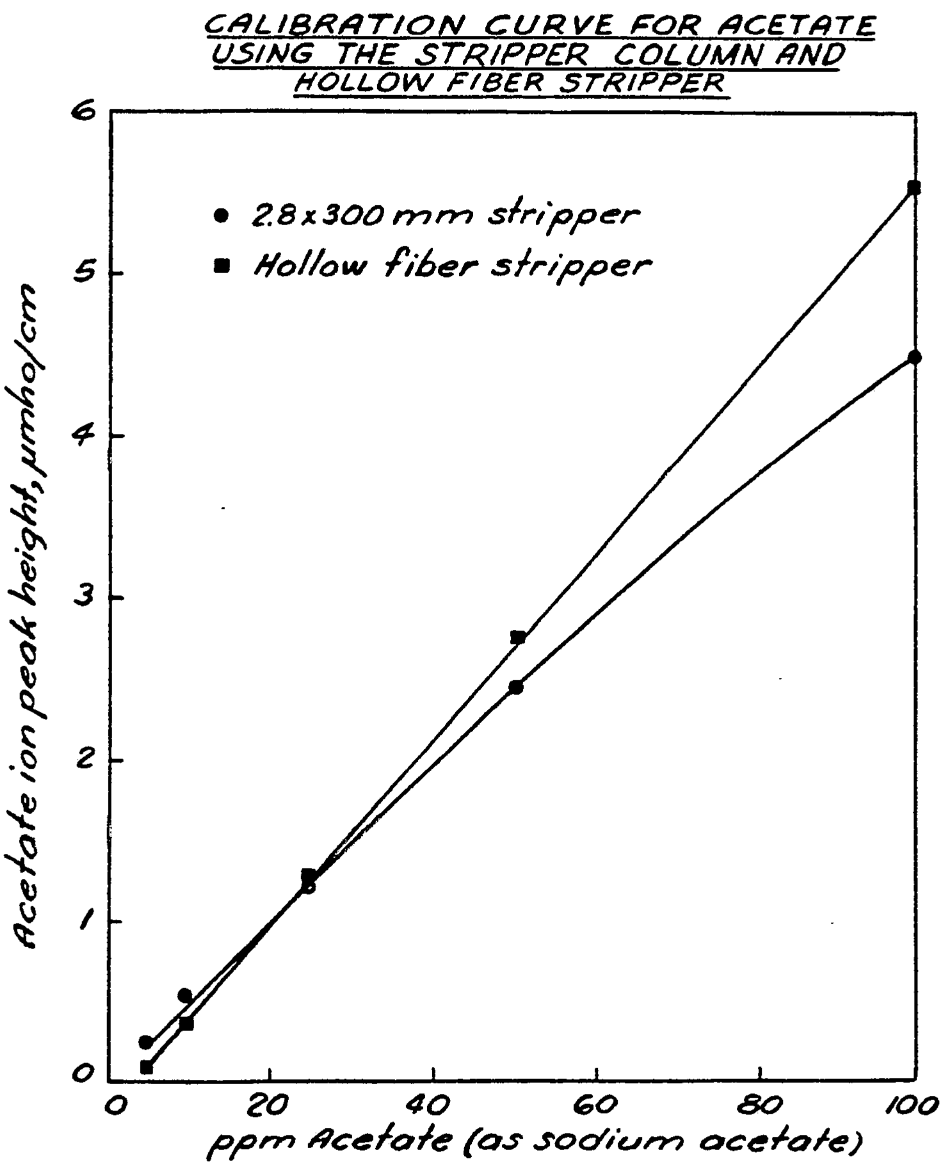
CALIBRATION CURVE FOR ACETATE USING THE STRIPPER COLUMN AND HOLLOW FIBER STRIPPER
2.8x300 mm stripper
Hollow fiber stripper
Acetate ion peak height, μmho/cm
0
1
2
3
4
5
6
0
20
40
60
80
100
ppm Acetate (as sodium acetate)

Fig. 10